# EUROPÄISCHE PATENTSCHRIFT

(11) **EP 2 686 700 B1**
(45) Veröffentlichungstag und Bekanntmachung des Hinweises auf die Patenterteilung: **06.06.2018**
(21) Anmeldenummer: 12702474.3
(22) Anmeldetag: 25.01.2012
(51) Int. Cl.: G01S 17/36, G01S 7/497, G01S 7/491, G01S 7/481

(54) **MESSVORRICHTUNG ZUR MESSUNG EINER ENTFERNUNG ZWISCHEN DER MESSVORRICHTUNG UND EINEM ZIELOBJEKT MIT HILFE OPTISCHER MESSSTRAHLUNG**
MEASUREMENT DEVICE FOR MEASURING A DISTANCE BETWEEN THE MEASUREMENT DEVICE AND A TARGET OBJECT USING AN OPTICAL MEASUREMENT BEAM
DISPOSITIF DE MESURE DE LA DISTANCE SÉPARANT LE DISPOSITIF DE MESURE ET UN OBJET CIBLE À L'AIDE D'UN RAYONNEMENT DE MESURE OPTIQUE

(30) Priorität: 17.03.2011 DE 102011005740
(43) Veröffentlichungstag der Anmeldung: 22.01.2014
(73) Patentinhaber: Robert Bosch GmbH, 70442 Stuttgart (DE)
(72) Erfinder: EISELE, Andreas, 70771 Leinfelden-Echterdingen (DE); SCHMIDTKE, Bernd, 71229 Leonberg (DE); SCHNITZER, Reiner, 72762 Reutlingen (DE)
(86) Internationale Anmeldenummer: PCT/EP2012/051085
(87) Internationale Veröffentlichungsnummer: WO 2012/123152

(56) Entgegenhaltungen:
- EP-A1- 1 903 299
- EP-A1- 2 264 481
- EP-A2- 2 017 651
- DE-A1- 4 439 298
- DE-A1-102006 013 290
- US-A1- 2006 228 050
- US-A1- 2008 186 470

## Beschreibung

### GEBIET DER ERFINDUNG

Die Erfindung betrifft eine Messvorrichtung zur Messung einer Entfernung zwischen der Messvorrichtung und einem Zielobjekt mit Hilfe von optischer Messstrahlung.

### HINTERGRUND DER ERFINDUNG

Es sind optische Entfernungsmessgeräte bekannt, die einen zeitlich modulierten Lichtstrahl in Richtung auf ein Zielobjekt hin, dessen Abstand zu dem Messgerät ermittelt werden soll, ausrichten. Das von dem angepeilten Zielobjekt reflektierte oder gestreute, rücklaufende Licht wird von dem Gerät zumindest teilweise detektiert und zur Ermittlung der zu messenden Entfernung verwendet. Ein typischer Messbereich liegt dabei in einem Bereich von Entfernungen von wenigen Zentimetern bis zu mehreren 100 Metern.

Um die Entfernung zu dem Zielobjekt mit einem Lichtstrahl messen zu können, wird der Lichtstrahl beispielsweise in seiner Intensität zeitlich moduliert. Es können beispielsweise Lichtpulse ausgesendet werden und eine Laufzeit eines Lichtpulses von der Aussendung bis zur Detektion gemessen werden und daraus die Entfernung zu dem Zielobjekt errechnet werden. Hierzu müssen jedoch sehr kurze Lichtpulse ausgesendet werden und eine sehr schnelle Detektionselektronik verwendet werden, um ausreichend genaue Messergebnisse erhalten zu können. Alternativ kann ein Lichtstrahl in seiner Intensität zeitlich periodisch moduliert werden und eine Phasenverschiebung zwischen dem ausgesendeten und dem detektierten Lichtsignal verwendet werden, um die Laufzeit und damit die Entfernung zum Zielobjekt zu bestimmen. Das Prinzip der Laserentfernungsmessung ist allgemein unter der Bezeichnung "Time of Flight Ranging" beispielsweise mit kontinuierlicher Modulation der Intensität des Laserstrahls bekannt.
Aus der DE 198 04 050 A1 ist ein Entfernungsmessgerät bekannt mit einer Laserdiode und einer Fotodiode zum Erzeugen bzw. Empfangen eines optischen Sende- bzw. Empfangsmesssignals. Zur Durchführung einer Kalibration des Entfernungsmessgeräts ist dieses mit einer verstellbaren reflektierenden Klappe versehen, die bei der Kalibration von einem Stellantrieb in einen optischen Pfad des Sendemesssignals verstellt wird, wodurch das Sendemesssignal umgelenkt und über eine Referenzstrecke auf die Fotodiode direkt gerichtet wird.
Aus der DE 10 2006 013 290 A1 ist eine Vorrichtung zur optischen Distanzmessung bekannt, bei der ein Detektor einer Empfangseinheit eine Mehrzahl von voneinander getrennten lichtempfindlichen Flächen aufweist, die getrennt voneinander aktivierbar sind. Jede der lichtempfindlichen Flächen weist dabei eine Fotodiode, beispielsweise eine PIN-Diode oder eine APD (Avalanche Photo Diode), oder einen CCD-Chip als lichtempfindliches Element auf. Diese lichtempfindlichen Elemente ermitteln ein analoges Detektionssignal, das einer Intensität des empfangenen Lichtes entspricht. Die lichtempfindlichen Flächen können selektiv aktiviert werden und auf diese Weise zu einer Gesamtdetektionsfläche kombiniert werden, die einem von einer Lichtquelle beleuchteten Teilbereich der Detektorfläche möglichst gut angepasst sein kann, um auf diese Weise ein Signal-Rausch-Verhältnis zu verbessern.

Aus der EP 1 903 299 A1 sowie der EP 2 264 481 A1 ist ein System und ein Verfahren zur Erzeugung eines 3d-Bildes bekannt, bei dem Licht mehrerer Lichtquellen auf ein zu erfassende Messobjekt ausgesendet wird und das von dem Objekt reflektierte bzw. gestreute Messlicht auf einen Flächendetektor der Vorrichtung, der eine Vielzahl von Pixel-Sensor-Zellen aufweist, abgebildet wird. Zur Bestimmung des Abstandes des Messobjektes von der Messvorrichtung weist das Messsystem der EP 1 903 299 A1 bzw. der EP 2 264 481 A1 einen internen Referenzpfad auf, mittels dem das Licht der Sendequellen direkt auf den Messdetektor umgeleitet werden kann, um ein Referenzsignal zu erzeugen.
Auch die Schriften DE 44 39 298 A1, US 2006/0228050 A1, EP 2 017 651 A2 und US 2008/186470 A1 offenbaren 3d Kamerasystem, bei denen der Messdetektor auch dazu dient, ein Referenzsignal zu detektieren.

### OFFENBARUNG DER ERFINDUNG

Es kann ein Bedarf an einer Messvorrichtung zur optischen Entfernungsmessung bestehen, die, insbesondere im Vergleich zu den zuvor beschriebenen herkömmlichen Entfernungsmessgeräten, eine verbesserte Kalibrierung der Messvorrichtung zulässt, um so Laufzeitfehler als auch Laufzeitdriften zu kompensieren.
Ferner kann ein Bedarf an einer Entfernungsmessvorrichtung bestehen, die, insbesondere im Vergleich zu den zuvor beschriebenen herkömmlichen Entfernungsmessgeräten, die Realisierung einer möglichst kompakten Referenzeinheit zur Vermessung der vorrichtungsinternen Referenzstrecke zur Kalibrierung der Messvorrichtung.

Die erfindungsgemäße Messvorrichtung zur optischen Entfernungsmessung weist eine Sendeeinrichtung zur Aussendung optischer Messstrahlung auf ein Zielobjekt hin; eine Empfangseinrichtung mit einer Detektionsfläche zur Detektion von von dem Zielobjekt zurücklaufender optischer Messstrahlung, wobei die Detektionsfläche eine Vielzahl von Pixeln aufweist, wobei jedes Pixel mindestens ein lichtempfindliches Element aufweist. Des Weiteren weist die erfindungsgemäße Messvorrichtung zur optischen Entfernungsmessung eine Referenzeinrichtung mit einer Detektionsfläche zur Detektion einer vorrichtungsinternen Referenzstrahlung auf. Erfindungsgemäß besteht die Detektionsfläche der Referenzeinrichtung aus eine Vielzahl von Pixeln, wobei jedes dieser Pixel mindestens ein lichtempfindliches Element aufweist.

Der Ausdruck Pixel wird im Rahmen dieser Anmeldung synonym für den "Detektor", das "Detektionselement" oder auch das "lichtempfindliche Element" selbst benutzt, wenn ein Pixel nur einen einzigen Detektor bzw. lichtempfindliches Element aufweist. Werden mehrere Detektoren oder lichtempfindliche Elemente zusammen ausgewertet, so bildet diese Mehrzahl ebenfalls ein Pixel im Sinne dieser Anmeldung. Dies ist unter der in der Anmeldung gelegentlich verwendeten Formulierung *"wobei jedes Pixel zumindest ein lichtempfindliches Element aufweist"* zu verstehen.

In einer vorteilhaften Ausführungsform wird ein solches lichtempfindliches Element durch eine SPAD ("single photon avalanche diode") gebildet.

Eine SPAD ist ein lichtempfindliches Element, das abhängig von einer auftreffenden Lichtintensität ein digitales Detektionssignal liefert. Jedes der Pixel kann dabei direkt oder beispielsweise unter Zwischenschaltung eines Multiplexers, der dazu ausgelegt ist, Detektionssignale mehrerer Pixel selektiv weiterzuleiten, mit der Auswerteeinrichtung verbunden sein. Auf diese Weise kann zum Beispiel erreicht werden, dass Detektionssignale einzelner Pixel oder einer Gruppe von Pixeln unabhängig von Detektionssignalen anderer Pixel von der Auswerteeinrichtung ausgewertet werden können.

Eine SPAD kann die Eigenschaft aufweisen, dass sie nicht wie herkömmliche analog arbeitende lichtempfindliche Elemente ein von der auftreffenden Strahlung linear abhängiges Detektionssignal liefert, sondern mit jedem auftreffenden Photon ein einzelnes Signal erzeugt wird. Die SPAD ist nach dem Auftreffen eines Photons für eine gewisse Totzeit, die im Bereich von beispielsweise 1 bis 100 ns liegen kann, nicht erneut aktivierbar. Man spricht auch von einem paralysierbaren Ansprechverhalten. Die Zählrate, mit der eine SPAD auftreffende Photonen zählen kann, ist somit nach oben hin durch die Totzeit begrenzt. Es kann daher vorteilhaft sein, anstatt einer einzigen großflächigen SPAD mehrere kleinere SPADs innerhalb eines Pixels vorzusehen und beispielsweise Detektionssignale von in einem einzelnen Pixel enthaltenen SPADs mit Hilfe eines Kombinierers zu kombinieren. Der Kombinierer kann hierbei beispielsweise in Form eines ODER-Gatters oder in Form eines Busses ausgestaltet sein. Auf diese Weise kann die von dem Pixel maximal erreichbare Photonenzählrate erhöht werden bzw., anders ausgedrückt, die Totzeit des Pixels zwischen einzelnen Detektionsereignissen verkürzt werden. Ferner kann zwischen einer SPAD und einem Kombinierer oder Bus ein Pulsverkürzer angeordnet sein, um ein von der SPAD generiertes digitales Signal zeitlich zu verkürzen und dadurch eine verkürzte Gesamttotzeit und eine erhöhte Photonenzählrate des Systems zu ermöglichen.

Die Anzahl von SPADs oder die Fläche von SPADs, die in einem Pixel enthalten sind, kann abhängig vom Ort des Pixels innerhalb der Detektionsfläche der Empfangseinrichtung variabel ausgewählt sein. Beispielsweise kann bekannt sein, dass die von dem Zielobjekt zurücklaufende Messstrahlung abhängig vom Abstand des Zielobjekts von der Messvorrichtung an einer anderen Position und/oder mit einer anderen Querschnittsfläche auf die Detektionsfläche der Empfangseinrichtung auftreffen kann. Die Anzahl bzw. die Fläche von SPADs innerhalb eines Pixels kann demnach ortsabhängig an die zu erwartende auftreffende Lichtintensität angepasst werden. Durch Anpassung der Flächen der SPADs und/oder Anzahl von SPADs innerhalb eines Pixels kann ein Dynamikbereich der Messvorrichtung optimiert werden. Durch Anpassung der Pixel-Flächen an eine Laserfleckgröße kann ein Signal-Rausch-Verhältnis optimiert werden.

Alternativer Weise können die lichtempfindliches Elementen aber auch durch modulierte CCDs, CMOS-Pixel oder APDs oder PIN Dioden gebildet werden.

Die Sendeeinrichtung kann eine Lichtquelle, beispielsweise in Form einer LED, eines Lasers oder einer Laserdiode sein, die Licht zeitlich moduliert hin zu dem Zielobjekt aussendet. Die zeitliche Modulation kann hierbei kontinuierlich und/oder periodisch, beispielsweise sinusartig, erfolgen. Es können auch Pulszüge, beispielsweise nicht-periodisch wie z.B. in Form von sogenannten Pseudo-Noise-Pulsabfolgen ausgesendet werden.

Die Sendeeinrichtung und die Empfangseinrichtung sind vorzugsweise derart ausgelegt und aufeinander abgestimmt, dass von dem Zielobjekt zurücklaufende optische Messstrahlung unter normalen Messbedingungen, das heißt beispielsweise bei Messabständen von wenigen Zentimetern bis zu einigen 100 Metern, eine Mehrzahl von Pixeln bzw. Detektoren gleichzeitig beleuchtet werden. Die Tatsache, dass eine Mehrzahl von Pixeln gleichzeitig beleuchtet wird, soll hierbei jedoch nicht wie bei herkömmlichen 3D-Kameras dazu benutzt werden, ein Abbild des Zielobjektes bzw. eine räumliche Auflösung hinsichtlich der Entfernung zu einzelnen Teilbereichen auf einer Oberfläche des Zielobjektes zu detektieren, sondern soll, wie weiter unten noch detaillierter erläutert, unter anderem Vorteile hinsichtlich einer Detektionsempfindlichkeit und/oder einer Justagetoleranz ermöglichen. Die Entfernung zwischen der Messvorrichtung und dem Zielobjekt wird dabei basierend auf einer Auswertung von Detektionssignalen mehrerer Pixel, insbesondere mehrerer der gleichzeitig beleuchteten Pixel, ermittelt.

Die Sendeeinrichtung kann hierzu einen Messstrahl aussenden, dessen Querschnitt ausreichend groß ist, dass der von dem Zielobjekt zurücklaufende Anteil des Messstrahls stets eine Mehrzahl von Pixeln beleuchtet. Um die von dem Zielobjekt zurücklaufende Messstrahlung zu bündeln und auf die Detektionsfläche zu leiten, um auf diese Weise für ein ausreichend starkes Detektionssignal zu sorgen, kann innerhalb eines optischen Weges von der Sendeeinrichtung zu der Empfangseinrichtung eine einfache Optik, beispielsweise in Form einer oder mehrerer Linsen, vorgesehen sein. Diese einfache Optik kann kostensparend und aufwandsreduzierend als nicht-automatisch-fokussierende Optik ("Fix-Fokus") ausgestaltet sein. Da eine solche nicht-automatisch-fokussierende Optik mit fester Brennweite einen von dem Zielobjekt zurücklaufenden Messstrahl nur dann optimal, d.h. mit kleinstem Spot-Durchmesser, auf die Detektionsfläche der Empfangseinrichtung fokussieren kann, wenn sich das Zielobjekt in dem der Brennweite und Bildebene entsprechenden Objektabstand zu der Messvorrichtung befindet, kann die Anzahl von Pixeln, die durch von dem Zielobjekt zurücklaufende Messstrahlung gleichzeitig beleuchtet werden, in Abhängigkeit von einem Abstand zwischen dem Zielobjekt und dem Messobjekt variieren. Beispielsweise kann die Optimierung des optischen Empfangssystems für den Empfang von Messstrahlung von weit entfernten Zielobjekten mit großem Objektabstand bedeuten, dass Brennweite und Bildabstand so zu wählen sind, dass für den großen Objektabstand die geometrische Abbildungsbedingung erreicht wird. Somit kann bei großer Entfernung der kleinste Spot-Durchmesser in der Bildebene erreicht werden ("die Abbildung ist scharf"). Durch die Festlegung der Brennweite und Bildebene kann die Anzahl von Pixeln, die im Falle eines näher liegenden Zielobjektes beleuchtet werden, wesentlich größer sein als bei einem weit entfernten Zielobjekt. Bei einem näher liegenden Zielobjekt kann die zurücklaufende Messstrahlung nicht mehr scharf abgebildet werden, so dass der beleuchtete Bereich der Detektionsfläche entsprechend größer werden kann.
Auch die Referenzeinheit besitzt eine Detektionsfläche zur Detektion einer vorrichtungsinternen Referenzstrahlung auf, wobei die Detektionsfläche der Referenzeinrichtung aus eine Vielzahl von Pixeln besteht, wobei jedes dieser Pixel mindestens ein lichtempfindliches Element aufweist. Statt eines Referenzdetektors werden erfindungsgemäß mehrere Referenzdetektoren eingesetzt.
In vorteilhafter Weise ist jedem Pixel der Detektionsfläche der Empfangseinrichtung ein Pixel der Detektionsfläche der Referenzeinrichtung zugeordnet. Zu jedem Detektor der Ziel-Empfangseinrichtung wird ein passender Referenz-Detektor ausgewählt, welcher beispielsweise ähnliche Laufzeitfehler, beispielsweise Laufzeit-Drift über Temperatur, aufweist.
Die Pixel der Detektionsfläche der Empfangseinrichtung bilden in vorteilhafter Weise ein Empfangsarray und die Pixel der Detektionsfläche der Referenzeinrichtung ein Referenzarray.
In einer besonders vorteilhaften Ausführung sind das Empfangsarray und das Referenzarray gleich ausgebildet, so dass zwei identische Arrays benutzt werden. Der Begriff Array bezieht sich dabei auf die geometrische Anordnung der Pixel bzw. Detektorelemente auf der Detektionsfläche. In dieser Ausführungsform lassen sich die in ihrer Position entsprechenden Array-Elemente von Empfangsarray und Referenzarray einander zuordnen.

Die einzelnen Pixel (Detektoren) eines Detektor-Arrays können abhängig von ihrer Lage im Array unterschiedliche Leitungslängen und damit unterschiedliche Kapazitäten aufweisen, bis die Signale der Pixel das Array verlassen und ausgewertet werden können. Durch äußere Einflüsse, wie z.B. Temperatur, oder die Eigenerwärmung im Betrieb kann die Flankensteilheit der Bauelemente variieren. Bereits geringe Änderungen der Flankensteilheiten, die typischerweise im Bereich von einigen 10ps/V liegen, könnten so Entfernungsfehler im mm-Bereich verursachen.

Die vorliegende Erfindung löst dieses Laufzeitproblem zwischen Ziel- und Referenzdetektor dadurch, dass für jeden Ziel-Detektor ein Referenzdetektor mit ähnlicher Laufzeitdrift herangezogen wird. Der Laufzeitfehler des Ziel-Detektors zu einem allgemeinen Referenzdetektor reduziert sich dadurch auf einen Laufzeitdrift-Unterschied zwischen Ziel- und zugehörigem Referenzdetektor.

Statt einem statischen Laufzeit-Offset, der beispielsweise in einer Look-up-Table hinterlegt werden könnte, werden mit der erfindungsgemäßen Lösung auch Laufzeit-Drifts (z.B. über Temperatur) reduziert.

Dies wird insbesondere auch durch einen symmetrischen Aufbau des Systems erreicht.

Alternativer Weise ist aber auch die Verwendung von nicht gleichen Arrayanordnungen von Empfangsarray und das Referenzarray möglich.

Eine besonders vorteilhafte und kompakte Ausgestaltung ergibt sich, wenn zwei - insbesondere identische - Arrays auf einem Chip implementiert sind, wobei dann eines zur Ziel- und eines zur Referenz-Messung genutzt wird.

Jedes der Pixel der Detektionsfläche von Empfangseinheit und /oder Referenzeinheit kann direkt oder beispielsweise unter Zwischenschaltung eines Multiplexers, der dazu ausgelegt ist, Detektionssignale mehrerer Pixel selektiv weiterzuleiten, mit einer Auswerteeinrichtung verbunden sein. Auf diese Weise kann zum Beispiel erreicht werden, dass Detektionssignale einzelner Pixel oder einer Gruppe von Pixeln unabhängig von Detektionssignalen anderer Pixel von der Auswerteeinrichtung ausgewertet werden können.

Da die Detektionssignale einzelner Pixel unabhängig voneinander ausgewertet können, können die Empfangseinrichtung und die Auswerteeinrichtung dazu ausgelegt werden, eine Entfernung zwischen der Messvorrichtung und dem Zielobjekt basierend auf einer Auswertung von Detektionssignalen ausschließlich von Pixeln, auf die Licht der von der Sendeeinrichtung beleuchteten Fläche des Zielobjektes rückgestrahlt wird, zu ermitteln. Mit anderen Worten kann die Auswerteeinrichtung beispielsweise zunächst in einer Vorabmessung ermitteln, welche der Pixel der Detektionsfläche tatsächlich Messstrahlung der Sendeeinrichtung empfangen und welche Pixel lediglich Hintergrundstrahlung detektieren, und kann anschließend für die tatsächliche Entfernungsbestimmung lediglich die Detektionssignale der von der Messstrahlung beleuchteten Pixel verwenden. Hierdurch kann ein Signal-Rausch-Verhältnis erheblich erhöht werden.

Um die Entfernung zwischen der Messvorrichtung und dem Zielobjekt ermitteln zu können, kann die Auswerteeinrichtung eine Mehrzahl an Entfernungsbestimmungseinrichtung (teilweise auch als "Binning-Schema" bekannt) aufweisen. Eine Entfernungsbestimmungseinrichtung kann dazu ausgelegt sein, Daten zu ermitteln, die mit der zu bestimmenden Entfernung zwischen der Messvorrichtung und dem Zielobjekt korrelieren und aus denen daher letztendlich die gewünschte Entfernung ermittelt werden kann. Beispielsweise kann eine Flugdauer von Messstrahlung zwischen einer Aussendung von der Sendeeinrichtung bis zu einer Detektion der von dem Zielobjekt zurücklaufenden Messstrahlung auf der Detektionsfläche zu ermittelt werden und daraus die gewünschte Entfernung bestimmt werden. Die Entfernungsbestimmungseinrichtung kann hierzu eine von der Sendeeinrichtung bereitgestellte Information über die zeitliche Modulation ausgesendeter Messstrahlung mit von der Empfangseinrichtung bereitgestellten Detektionssignalen vergleichen. Im Fall einer periodisch modulierten ausgesendeten Messstrahlung kann beispielsweise aus einem Phasenunterschied zwischen einem Aussendungssignal und einem Detektionssignal eine entsprechende Entfernung ermittelt werden.

Prinzipiell kann eine einzige Entfernungsbestimmungseinrichtung für die Ermittlung einer Entfernung zwischen der Messvorrichtung und dem Zielobjekt genügen. Um die Anzahl von Entfernungsbestimmungseinrichtungen gering zu halten, kann es vorteilhaft sein, die Detektionssignale einzelner Pixel oder einer Gruppe von Pixeln zum Beispiel mit Hilfe eines Multiplexers nacheinander an eine Entfernungsbestimmungseinrichtung zu leiten. Aufgrund einer derart sequentiellen Verarbeitung von Detektionssignalen kann es zu einer Verlängerung einer Gesamtmessdauer kommen. Alternativ kann jedem der Pixel eine eigene Entfernungsbestimmungseinrichtung zugeordnet sein. In diesem Fall kann aus jedem der Detektionssignale der Vielzahl von Pixeln jeweils eine Entfernung bestimmt werden, möglicherweise zeitlich parallel zueinander, und aus der Vielzahl von bestimmten Entfernungen kann schließlich beispielsweise durch Mittelung eine letztendlich zu bestimmende Entfernung zwischen der Vorrichtung und dem Zielobjekt ermittelt werden. Allerdings kann es hierzu notwendig sein, eine sehr große Anzahl von Entfernungsbestimmungseinrichtungen in der Messvorrichtung vorzusehen, was den Aufbau und die Fertigung der Messvorrichtung kompliziert gestalten kann.

Sozusagen als Mittelweg zwischen diesen beiden extremen Alternativen kann eine Mehrzahl von Pixeln mit einer Entfernungsbestimmungseinrichtung verbunden sein und die Entfernungsbestimmungseinrichtung kann dazu ausgelegt sein, die entfernungskorrelierten Daten basierend auf Detektionssignalen der Mehrzahl von Pixeln zu bestimmen. Die hier vorgeschlagene Auswerteeinrichtung weist daher eine Mehrzahl von Entfernungsbestimmungseinrichtungen auf und kann dazu ausgelegt sein, die Entfernung zwischen der Messvorrichtung und dem Zielobjekt basierend auf den von den Entfernungsbestimmungseinrichtungen bestimmten entfernungskorrelierten Daten zu bestimmen, beispielsweise durch Mittelwertbildung.

Durch Einsatz einer Mehrzahl an Entfernungsbestimmungseinrichtungen kann die Zeit, die für das Auffinden der Messstrahlung empfangenden Pixel benötigt wird, reduziert werden, da durch geschickt gewählte Auswahlalgorithmen variable Kombinationen von Pixeln parallel ausgewertet werden können.

Die Anzahl von lichtempfindlichen Elementen oder die Fläche der einzelnen lichtempfindlichen Elemente, die in einem Pixel enthalten sind, kann abhängig vom Ort des Pixels innerhalb der Detektionsfläche der Empfangseinrichtung und / oder Referenzeinheit variabel ausgewählt sein. Beispielsweise kann bekannt sein, dass die von dem Zielobjekt zurücklaufende Messstrahlung abhängig vom Abstand des Zielobjekts von der Messvorrichtung an einer anderen Position und/oder mit einer anderen Querschnittsfläche auf die Detektionsfläche der Empfangseinrichtung auftreffen kann. Die Anzahl bzw. die Fläche von lichtempfindlichen Elementen innerhalb eines Pixels kann demnach ortsabhängig an die zu erwartende auftreffende Lichtintensität angepasst werden. Durch Anpassung der Flächen und/oder Anzahl der lichtempfindlichen Elemente innerhalb eines Pixels kann ein Dynamikbereich der Messvorrichtung optimiert werden. Durch Anpassung der Pixel-Flächen an eine Laserfleckgröße kann ein Signal-Rausch-Verhältnis optimiert werden.

Wenn beispielsweise im Lichtweg zwischen der Sendeeinrichtung und der Empfangseinrichtung eine nicht-automatisch-fokussierende Optik, die für weitentfernte Zielobjekte abbildend bzw. optimal fokussierend ausgelegt ist, angeordnet ist, kann für weit entfernte Zielobjekte die zurücklaufende Messstrahlung mit einem kleinen Fleck- bzw. Spot-Durchmesser fokussiert werden. Innerhalb eines solchen Bereiches der Detektionsfläche kann es vorteilhaft sein, dass jedes der Pixel lediglich eine einziges lichtempfindliches Element oder nur wenige lichtempfindliche Elemente enthält. Wenn mit einer solchen Fix-Fokus-Messvorrichtung näher liegende Zielobjekte anvisiert werden, kann die zurücklaufende Messstrahlung auf der Detektionsfläche nicht als kleiner Fleck fokussiert werden, sondern trifft eventuell defokussiert auf eine größere Teilfläche der Detektionsfläche. Insgesamt werden in diesem Fall dann mehr Pixel beleuchtet als im Fall eines weit entfernt liegende Zielobjektes. Daher kann es vorteilhaft sein, in Randbereichen des beleuchteten Teilbereiches der Detektionsfläche jeweils eine Mehrzahl von lichtempfindlichen Elementen zu einem einzelnen Pixel (oder "sub-array" oder "cluster") zusammenzufassen.

Beispielsweise können die Sendeeinrichtung und die Empfangseinrichtung nebeneinander entlang einer Parallaxenachse angeordnet sein. Solche sogenannte biaxiale Messsysteme können den Vorteil haben, dass keine aufwändige Strahlungsteilung zur Selektion des rücklaufenden Messstrahls notwendig ist. Der von der Sendeeinrichtung ausgestrahlte und von dem Zielobjekt zurücklaufende Messstrahl kann in diesem Fall je nach Entfernung des Zielobjektes an einer anderen Stelle entlang der Parallaxenachse auf die Detektionsfläche treffen und unterschiedliche Querschnitte aufweisen. In diesem Fall kann es vorteilhaft sein, die Anzahl von lichtempfindlichen Elementen, die in einem Pixel enthalten sind, abhängig vom Ort des Pixels entlang der Parallaxenachse zu variieren. Insbesondere kann es vorteilhaft sein, die Anzahl von lichtempfindlichen Elementen, die in einem Pixel enthalten sind, in Pixeln nahe der Sendeeinrichtung kleiner zu wählen als in Pixeln entfernt von der Sendeeinrichtung.

Alternativ können die Sendeeinrichtung und die Empfangseinrichtung koaxial zueinander angeordnet sein. Bei einer solchen monoaxialen Messvorrichtung kann beispielsweise mit Hilfe semitransparenter Spiegel erreicht werden, dass das Zentrum des von der rücklaufenden Strahlung beleuchteten Bereichs der Detektionsfläche unabhängig von der Entfernung des Zielobjekts weitgehend orts-konstant bleibt. Allerdings kann der Querschnitt des beleuchteten Bereichs auf der Detektionsfläche weiterhin von der Entfernung des Zielobjektes abhängen. Bei weit entfernten Zielobjekten und einer Optik mit weiter Brennweite kann es zu einem kleinen beleuchteten Fleck kommen, bei näher liegenden Zielobjekten zu einem größeren beleuchteten Fleck. Es kann vorteilhaft sein, die Anzahl von lichtempfindlichen Elementen, die in einem Pixel enthalten sind, in Pixeln nahe dem Zentrum der Detektionsfläche kleiner zu wählen als in Pixeln entfernt von dem Zentrum der Detektionsfläche.

Mögliche Aspekte, Vorteile und Ausgestaltungen der Erfindung wurden vorangehend mit Bezug auf einzelne Ausführungsformen der Erfindung beschrieben. Die Beschreibung, die zugehörigen Figuren sowie die Ansprüche enthalten zahlreiche Merkmale in Kombination. Ein Fachmann wird diese Merkmale, insbesondere auch die Merkmale verschiedener Ausführungsbeispiele, auch einzeln betrachten und zu sinnvollen weiteren Kombinationen zusammenfassen.

### KURZE BESCHREIBUNG DER FIGUREN

Nachfolgend werden Ausführungsformen der Erfindung und darin enthaltene Teilaspekte mit Bezug auf die beigefügten Figuren beschrieben. Die Figuren sind lediglich schematisch und nicht maßstabsgetreu. Gleiche oder ähnliche Bezugszeichen in den Figuren bezeichnen gleiche oder ähnliche Elemente.
Fig. 1 zeigt eine Messvorrichtung zur optischen Entfernungsmessung gemäß einer Ausführungsform der vorliegenden Erfindung.
Fig. 2 zeigt eine schematisierte Schaltung von zwei lichtempfindlichen Elementen, die mit einem Kombinierer verbunden sind, für eine Messvorrichtung gemäß einer Ausführungsform der vorliegenden Erfindung.
Fig. 3 zeigt eine Draufsicht auf eine Detektionsfläche einer Empfangseinrichtung für eine Messvorrichtung gemäß einer Ausführungsform der vorliegenden Erfindung.
Fig. 4 zeigt eine Draufsicht auf eine alternative Detektionsfläche einer Empfangseinrichtung für eine Messvorrichtung gemäß einer Ausführungsform der vorliegenden Erfindung.
Fig. 5 zeigt ein einzelnes lichtempfindliches Element, das mit einer Entfernungsbestimmungseinrichtung verbunden ist.
Fig. 6 zeigt zwei lichtempfindliche Elemente, die über einen Multiplexer mit einer Entfernungsbestimmungseinrichtung verbunden sind.
Fig. 7 zeigt zwei Pixel mit jeweils 9 lichtempfindlichen Elementen, die über Kombinierer und Multiplexer mit einer Entfernungsbestimmungseinrichtung verbunden sind.
Fig. 8 zeigt eine Detektionsfläche einer Empfangseinrichtung mit Pixeln, bei denen die Anzahl von in den Pixeln enthaltenen lichtempfindlichen Elementen ortsabhängig variiert und welche über Kombinierer und Multiplexer mit mehreren Entfernungsbestimmungseinrichtungen verbunden sind.
Fig. 9 zeigt ein erfindungsgemäßes Ziel-Detektor-Array mit einem identischen Referenz-Detektor-Array, bestehend aus je 9 Pixeln mit jeweils einem lichtempfindlichen Element.
Fig. 10 zeigt ein alternatives erfindungsgemäßes Ziel-Detektor-Array mit einem identischen Referenz-Detektor-Array, bestehend aus je 3 Pixeln mit jeweils mehreren lichtempfindlichen Elementen.
Fig. 11 zeigt ein weiteres erfindungsgemäßes Ziel-Detektor-Array mit einem zu diesem unterschiedlichen Referenz-Detektor-Array, bestehend aus 9 bzw. 3 Pixeln mit jeweils einem lichtempfindlichen Element.

### DETAILIERTE BESCHREIBUNG VON AUSFÜHRUNGSFORMEN

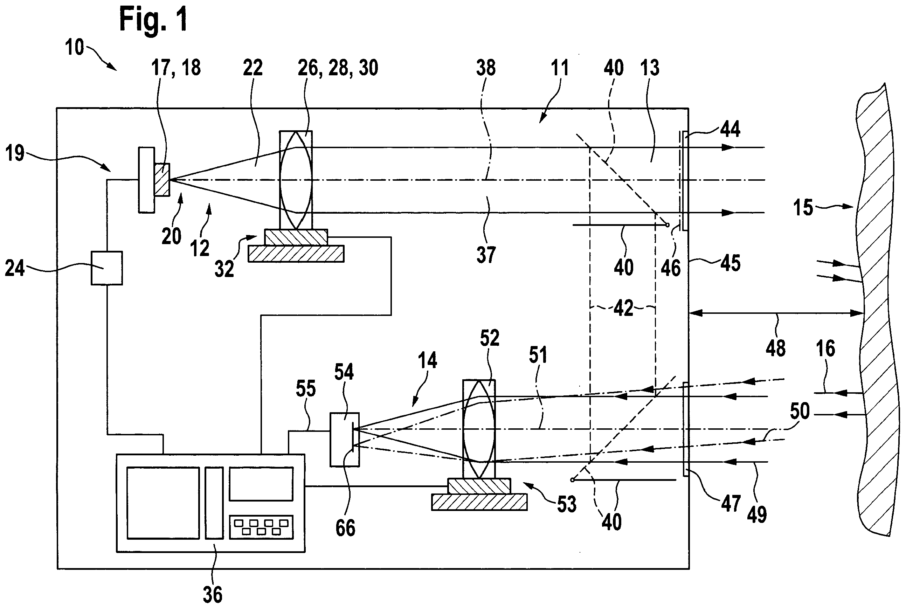

In Fig. 1 ist in schematischer Weise eine erfindungsgemäße Messvorrichtung 10 zur optischen Entfernungsmessung mit den wichtigsten Komponenten zur Beschreibung ihrer Funktion dargestellt.

Die Messvorrichtung 10 weist ein Gehäuse 11 auf, in dem eine Sendeeinrichtung 12 zur Aussendung optischer Messstrahlung 13 sowie eine Empfangseinrichtung 14 zur Detektion von von einem Zielobjekt 15 zurücklaufender Messstrahlung 16 angeordnet sind.

Die Sendeeinrichtung 12 beinhaltet eine Lichtquelle, die im dargestellten Ausführungsbeispiel durch eine Halbleiter-Laserdiode 18 realisiert ist. Die Laserdiode 18 sendet einen Laserstrahl 20 in Form eines für das menschliche Auge sichtbaren Lichtbündels 22 aus. Die Laserdiode 18 wird dazu über ein Steuergerät 24 betrieben, das durch eine entsprechende Elektronik eine zeitliche Modulation eines elektrischen Eingangssignals 19 der Laserdiode 18 erzeugt. Durch eine derartige Modulation des Diodenstromes lässt sich erreichen, dass die optische Messstrahlung 13, welche zur Entfernungsmessung genutzt wird, ebenfalls in gewünschter Weise zeitlich in ihrer Intensität moduliert wird.

Das Laserstrahlbündel 20 durchläuft anschließend eine Kollimationsoptik 26 in Form eines Objektivs 28, das in Fig. 1 in vereinfachter Weise in Form einer einzelnen Linse dargestellt ist. Das Objektiv 28 befindet sich in diesem Ausführungsbeispiel optional auf einer Verstellmimik 32, die prinzipiell eine Änderung der Position des Objektivs in allen drei Raumrichtungen, beispielsweise zu Justagezwecken, ermöglicht. Alternativ kann die Kollimationsoptik 26 jedoch auch bereits Bestandteil der Laserdiode 18 sein bzw. fest mit dieser verbunden sein.

Nach Durchlaufen des Objektivs 28 ergibt sich ein beispielsweise Amplitudenmoduliertes Signal der Messstrahlung 13 in Form eines nahezu parallelen Lichtbündels 37, das sich entlang einer optischen Achse 38 der Sendeeinheit 12 ausbreitet.

In der Sendeeinrichtung 12 kann sich zudem noch eine vorzugsweise schaltbare Strahlumlenkung 40 befinden, die es gestattet, die Messstrahlung 13 ganz oder teilweise unter Umgehung des Zielobjektes 15 direkt, das heißt geräteintern, auf die Messeinrichtung 54 umzulenken. Auf diese Weise kann eine geräteinterne Referenzstrecke 42 erzeugt werden, die eine Kalibrierung bzw. einen Abgleich der Messvorrichtung gestattet. Das Messsignal dient in diesem Fall als Referenzstrahlung.

Wird mit der Messvorrichtung 10 eine Entfernungsmessung durchgeführt, verlässt die Messstrahlung 13 das Gehäuse 11 der Messvorrichtung durch ein optisches Fenster 44 in der Stirnwand 45 der Messvorrichtung 10. Die Öffnung des optischen Fensters 44 kann beispielsweise durch einen Shutter 46 gesichert sein. Zur eigentlichen Messung wird die Messvorrichtung 10 dann auf ein Zielobjekt 15 hin ausgerichtet, dessen Entfernung 48 zur Messvorrichtung 10 ermittelt werden soll. Das an dem gewünschten Zielobjekt 15 reflektierte oder gestreute Signal 16 bildet zurücklaufende optische Messstrahlung 16 in Form eines zurücklaufenden Strahlenbündels 49 bzw. 50, das zu einem gewissen Teil wieder in die Messvorrichtung 10 zurückgelangt.

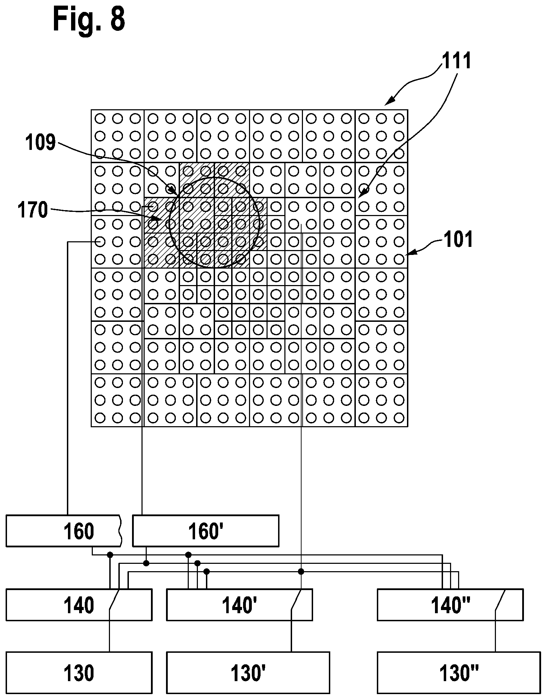

Durch ein Eintrittsfenster 47 an der Stirnseite 45 der Messvorrichtung 10 wird die zurücklaufende Messstrahlung 16 in die Messvorrichtung 10 eingekoppelt und trifft dann, wie in Fig. 1 dargestellt, auf eine Empfangsoptik 52.
In Fig. 1 sind exemplarisch zur Verdeutlichung zwei zurücklaufende Messstrahlenbündel 49 bzw. 50 für zwei unterschiedliche Zielobjektentfernungen 48 eingezeichnet. Für große Objektentfernungen, wobei groß als groß gegenüber der Brennweite der Empfangsoptik 52 interpretiert werden kann, fällt die vom Zielobjekt 15 zurücklaufende optische Messstrahlung 16 annähernd parallel zur optischen Achse 51 der Empfangseinrichtung 14 ein. Dieser Fall ist im Ausführungsbeispiel der Fig. 1 durch das Messstrahlenbündel 49 repräsentiert. Mit kleiner werdender Objektentfernung wird die in die Messvorrichtung einfallende zurücklaufende Messstrahlung 16 aufgrund einer Parallaxe immer mehr gegenüber der optischen Achse 51 der Empfangseinrichtung 14 geneigt. Als Beispiel für ein solches rücklaufendes Messstrahlenbündel im Nahbereich der Messvorrichtung ist in Fig. 1 das Strahlenbündel 50 eingezeichnet.
Die Empfangsoptik 52, die in Fig. 1 ebenfalls nur schematisch durch eine einzelne Linse symbolisiert ist, fokussiert das Strahlenbündel der zurücklaufende Messstrahlung 16 auf die Detektionsfläche 66 eines in der Messeinrichtung 54 vorgesehenen Empfangsdetektors. Der Detektor weist zur Detektion der optischen Messstrahlung eine Vielzahl von Pixeln auf. Jedes der Pixel weist mindestens ein lichtempfindliches Element auf. Durch die auf der Detektionsfläche 66 vorgesehenen lichtempfindlichen Elemente, die einzeln oder in Gruppen zusammengefasst in Pixeln Matrix-artig angeordnet und mit einer Auswerteeinrichtung 36 verbunden sind, wird die einfallende zurücklaufende Messstrahlung 16 in ein elektrisches Signal 55 umgewandelt und der weiteren Auswertung in der Auswerteeinrichtung 36 zugeführt.
Die Messeinrichtung 54 ist zudem auch Bestandteil einer Referenzeinheit. Dazu weist die Messeinheit 54 auch eine Detektionsfläche 117 zur Detektion eines Referenzsignals auf, welches über eine geräteinterne Referenzstrecke 42 auf die Messeinrichtung 54 und die Detektionsfläche 117 des Referenzdetektor geleitet werden kann. Der Detektor der Referenzeinheit weist zur Detektion der über den Referenzpfad 42 versendeten optischen Messstrahlung eine Vielzahl von Pixeln 127 auf. Jedes der Pixel 127 weist mindestens ein lichtempfindliches Element 107 auf. (Siehe hierzu insbesondere Figuren 8 bis 10). Durch die in der Detektionsfläche 127 vorgesehenen lichtempfindlichen Elemente 107, die einzeln oder in Gruppen zusammengefasst in Pixeln 127 Matrix-artig angeordnet und mit einer Auswerteeinrichtung 36 verbunden sind, wird die einfallende Referenzstrahlung in ein elektrisches Signal umgewandelt und der weiteren Auswertung in der Auswerteeinrichtung 36 zugeführt.

Die von einem einzelnen lichtempfindlichen Element oder einer Kombination von lichtempfindlichen Elementen generierten Detektionssignale können den in einer Auswerteeinrichtung 36 enthaltenen Entfernungsbestimmungseinrichtungen zugeführt werden.

Eine Entfernungsbestimmungseinrichtung kann die Detektionssignale aufsummieren und daraus ein Signal erzeugen, das einer zeitabhängigen Intensität des auf die jeweiligen lichtempfindlichen Elemente auftreffenden Lichtsignals bzw. der Lichtintensität entspricht. Indem dieses Signal in Relation zu einem Anregungssignal gesetzt wird, das den zeitlichen Verlauf der von der Sendeeinrichtung emittierten Photonenrate angibt, kann auf eine Photonenflugzeit von der Sendeeinrichtung hin zu dem Zielobjekt und wieder zurück zu der Empfangseinrichtung geschlossen werden. Falls die Sendeeinrichtung das ausgesendete Licht beispielsweise sinusartig periodisch moduliert, kann eine Flugzeit aus einem Phasenunterschied zwischen der ausgesendeten und der detektierten Messstrahlung ermittelt werden.

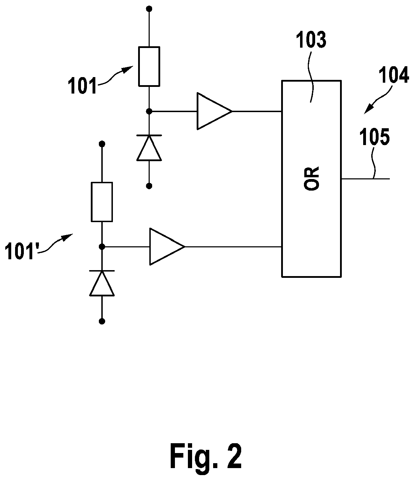

Fig. 2 zeigt zwei lichtempfindliche Elemente 101, 101', deren Detektionssignale jeweils an ein ODER-Gatter 103 weitergeleitet werden. Das ODER-Gatter 103 wirkt als Kombinierer 104, indem es sowohl Detektionssignale des ersten lichtempfindlichen Elements 101 als auch Detektionssignale des zweiten lichtempfindlichen Elements 101' aufnimmt und an einem Ausgang 105 ein kombiniertes Signal dieser Eingangssignale ausgibt. Analog sind auch die lichtempfindlichen Elemente des Referenzdetektors aufgebaut. Die für die Empfangseinheit nachfolgend beschrieben Funktionsweise und der Aufbau zur Messung von Entfernungsmesswerten gilt analog auch für die Referenzeinheit der Messvorrichtung.

Nachfolgend wird die Messmethode zuerst anhand der Empfangseinheit detailliert dargestellt, um dadurch den Aufbau und die Funktionsweise der erfindungsgemäßen Referenzeinheit und deren Zusammenspiel mit der Empfangseinheit zu verdeutlichen.

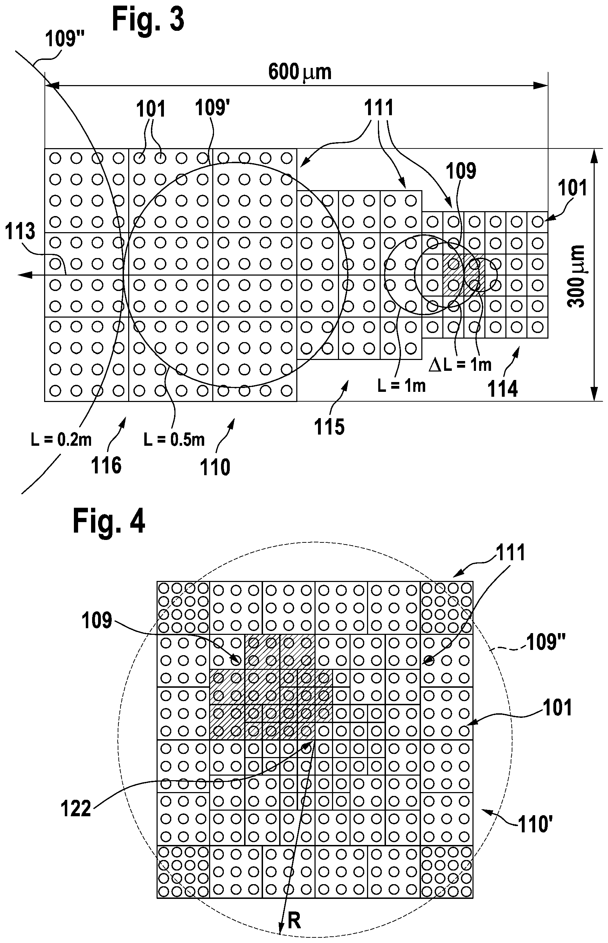

Fig. 3 zeigt schematisch eine Detektionsfläche 110 der Empfangseinheit für eine Laser-Entfernungsmessvorrichtung mit unkorrigierter Parallaxe. Hierbei sind kreisförmige Laserflecke 109 oder Laserspots, deren Durchmesser abhängig von einer Entfernungen L zwischen der Messvorrichtung und dem Zielobjekt variiert, auf der Detektionsfläche 110 eingezeichnet. Es wurde hierbei eine ideale Linse mit einer Brennweite f = 30 mm, einem Durchmesser d = 4 mm und einer Parallaxe von 5 mm für den Fall optimaler Justage auf große Entfernungen angenommen. Die Laserstrahlung wurde dabei mit einer Divergenz von 1 mrad angenommen. Es ist bei dieser Ausgestaltung der Detektionsfläche 110 vorteilhaft, dass die Größe der Pixel 111 bzw. die Anzahl von lichtempfindlichen Elementen 101 innerhalb jeweiliger Pixel 111 entlang der Parallaxenachse 113 zunimmt. Die Detektionsfläche 110 ist Bestandteil der Messeinrichtung 54. Die Parallaxenachse wird hierbei als die Schnittgerade zwischen einer Detektionsflächenebene und einer Ebene, die von der optischen Achse der Empfangsoptik und der Laserstrahlachse der Entfernungsmessvorrichtung aufgespannt wird, angenommen. Es ist zu erkennen, dass in einem ersten Bereich 114, in dem der Laserfleck 109 auftrifft, wenn der Laserstrahl von einem weit entfernten Zielobjekt zurückgestrahlt wird, kleine Pixel vorgesehen sind, die jeweils nur ein einziges lichtempfindliches Element enthalten. In einem Bereich 115, in dem der Laserfleck 109' auftrifft, wenn das Zielobjekt etwa 0,5 bis 1 m entfernt ist, sind größere Pixel mit jeweils vier lichtempfindlichen Elementen vorgesehen. In einem weiteren Bereich 116, in dem der Laserfleck 109" für den Fall sehr naher Zielobjekte auftrifft, sind besonders große Pixel mit 8 bzw. 16 lichtempfindlichen Elementen vorgesehen. Die Empfangsoptik ist dabei so optimiert, dass die bestmögliche Abbildungsqualität, das heißt der kleinstmögliche Laserfleckdurchmesser auf der Detektionsfläche, bei der größten Entfernung des Zielobjekts erreicht wird.

Bei großen Entfernungen ist der Laserfleck 109 aufgrund der scharfen Abbildung verhältnismäßig klein. Gleichzeitig ist die aus zurücklaufender Mess- und Hintergrundstrahlung zusammengesetzte Intensität des auftreffenden Lichtes aufgrund des geringen Anteils der Messstrahlung von dem weit entfernten Zielobjekt verhältnismäßig gering. Bei näher positionierten Zielobjekten wird insgesamt mehr Messstrahlung vom Zielobjekt zurück zur Detektionsfläche 110 reflektiert bzw. gestreut. Gleichzeitig wird die Messstrahlung durch die Fix-Fokus-Empfangsoptik nicht mehr scharf auf die Detektionsfläche 110 abgebildet.

In Summe ergibt sich aus einer geometrischen Betrachtung für einen LaserEntfernungsmesser mit leicht divergentem Laser-Strahl und Fix-Fokus-Empfangsoptik für den Anteil der empfangenen Laserstrahlung bei großen Entfernungen eine quadratisch über der Entfernung abfallende und bei geringen Entfernungen eine über der Entfernung konstante Licht-Intensität in der Detektorebene. Der Intensitätsanteil der Hintergrundstrahlung ist hingegen in erster Näherung entfernungsunabhängig.

Mit einer wie in Fig. 3 dargestellten ortsabhängigen Ausgestaltung der Größe der in der Detektionsfläche 110 enthaltenen Pixel 101 kann zum einen erreicht werden, dass sowohl bei großen Entfernungen des Zielobjektes als auch bei kleinen Entfernungen des Zielobjektes ein Laserfleck 109 jeweils auf eine Mehrzahl von Pixeln 111 trifft und von diesen ausgewertet werden kann. Die Größe der aktiven Detektionsfläche kann dabei optimal an die Größe des Laserflecks angepasst und somit das Signal-Rausch-Verhältnis optimiert werden. Zum anderen kann mit einer solchen ortsabhängigen Ausgestaltung auch der Dynamik-Bereich der lichtempfindlichen Elemente optimal ausgenutzt werden, da die Lichtintensität des auftreffenden Lichtes (Laser- und Hintergrund-Anteil) bei großen Entfernungen geringer ist als bei kleinen Entfernungen. Bei den Detektorflächen, die nur bei geringen Entfernungen mit empfangener Messstrahlung beaufschlagt werden, kann daher die Fläche der einzelnen lichtempfindlichen Elemente reduziert werden. In den Detektorbereichen, in denen die Intensität der empfangenen Messstrahlung nahezu konstant bleibt, kann die Anzahl von in den einzelnen Pixeln 111 enthaltenen lichtempfindlichen Elementen 101 bei gleichbleibender Fläche der lichtempfindlichen Elemente vergrößert werden.

Fig. 4 zeigt eine Ausführungsform einer Detektionsfläche 110' für einen koaxialen Laserentfernungsmesser oder einen Laserentfernungsmesser mit korrigierter Parallaxe. Eine solche Korrektur kann mit Hilfe eines Nahbereichselementes oder alternativer, bekannter Methoden erreicht werden. In einem solchen Fall dominiert im Wesentlichen der Abbildungsfehler durch die endliche Schärfentiefe der Empfangsoptik, so dass eine konzentrische Anordnung der Pixel gleicher Größe vorteilhaft ist. Ein von einem weit entfernten Zielobjekt zurücklaufender Laserstrahl wird gut fokussiert und erzeugt einen relativ kleinen Laserfleck 109 in der Nähe des Zentrums 122 der Detektionsfläche 110', das heißt in der Nähe des Durchstoßpunktes der optischen Achse der Empfangsoptik durch die Detektionsflächenebene. Ein von einem näher liegenden Zielobjekt zurücklaufender Laserstrahl erzeugt einen Laserfleck 109" mit wesentlich größerem Durchmesser. Die Pixel 111 weisen in der Nähe des Zentrums 122 eine geringere Fläche und eine geringere Anzahl von darin enthaltenen lichtempfindlichen Elementen 101 auf als entfernt vom Zentrum 122 der Detektionsfläche 110', das heißt am Rand der Detektionsfläche.

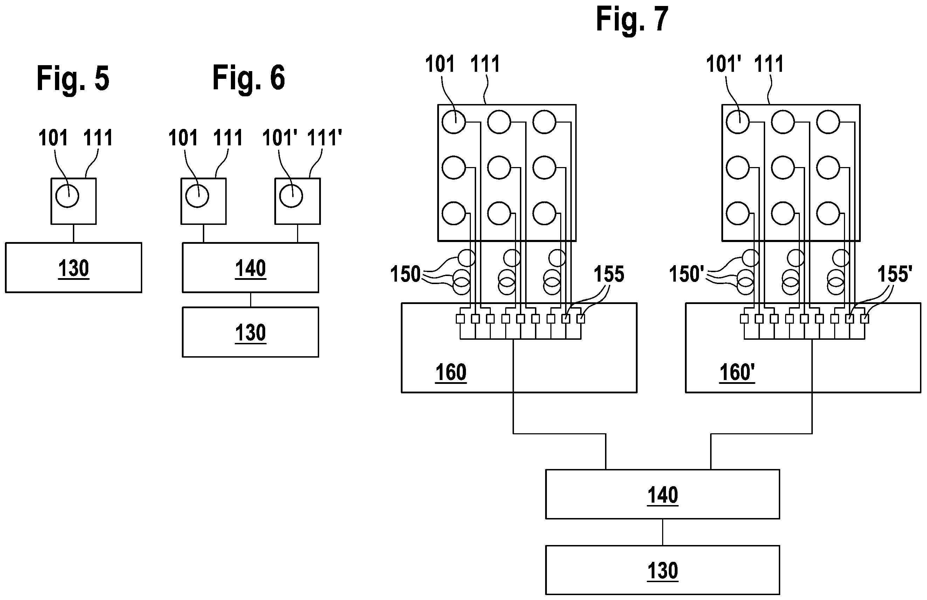

In den Fig. 5 bis 7 sind einzelne Elemente, wie sie zur Realisierung einer Empfangseinrichtung gemäß Ausführungsformen der vorliegenden Erfindung eingesetzt werden, als Blockschema dargestellt. Analoge Ausgestaltungen gelten auch für die einzelnen Elemente der Referenzeinrichtung.

Fig. 5 zeigt ein Pixel 111 mit einem einzelnen lichtempfindlichen Element 101. Das Pixel ist mit einer Entfernungsbestimmungseinrichtung 130 verbunden.

Fig. 6 zeigt zwei Pixel 111, 111' mit jeweils einem lichtempfindlichen Element 101, 101'. Die Pixel 111, 111' sind mit einem Multiplexer 140 verbunden, der die von den Pixeln 111, 111' gelieferten Detektionssignale selektiv an eine Entfernungsbestimmungseinrichtung 130 weiterleitet.

In Fig. 7 ist eine Anordnung von zwei Pixeln 111, 111' mit jeweils neun lichtempfindlichen Elementen 101, 101' dargestellt. Die Detektionssignale von den einzelnen lichtempfindlichen Elementen 101, 101' werden, gegebenenfalls nach einer durch zusätzliche Verzögerungselemente 150, 150' bewirkten zeitlichen Verzögerung, jeweils an einen Kombinierer 160, 160' weitergeleitet. Die Verzögerung kann der Kompensation von Laufzeitunterschieden und damit der zeitlichen Synchronisation der lichtempfindlichen Elemente eines Pixels oder verschiedener Pixel dienen. In den Kombinierern 160, 160' werden die Detektionssignale miteinander kombiniert. Die kombinierten Detektionssignale werden von den Kombinierern 160, 160' an einen Multiplexer 140 und von dort aus weiter an eine Entfernungsbestimmungseinrichtung 130 geleitet.

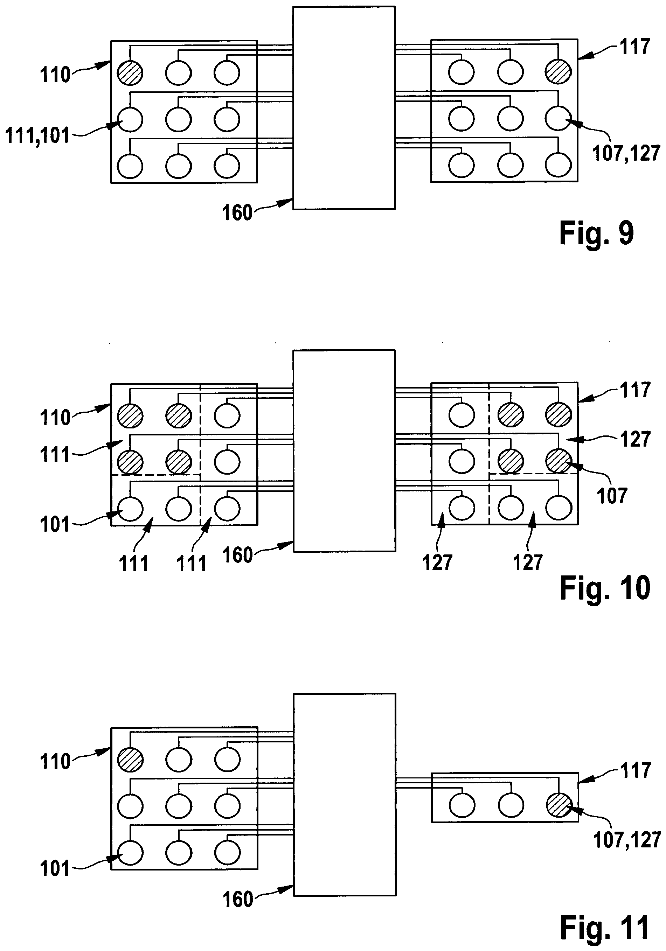

Fig. 8 zeigt eine spezielle Ausführungsform für eine Entfernungsmessvorrichtung mit korrigierter Parallaxe unter Verwendung solcher Elemente für N = 92 Pixel 111. Hierbei weisen 48 Pixel lediglich ein einzelnes lichtempfindliches Element auf, 24 Pixel weisen jeweils vier lichtempfindliche Elemente in einer 2x2-Anordnung auf und 20 Pixel weisen jeweils 9 lichtempfindliche Elemente in einer 3x3-Anordnung auf. Jedes Pixel 111 mit mehr als einem lichtempfindlichen Element 101 ist genau mit einem Kombinierer 160, 160' verbunden. Es gibt demnach 44 Kombinierer 160. Die Ausgänge der Pixel 111 mit nur einem lichtempfindlichen Element bzw. der Kombinierer 160 sind mit Eingängen von K Multiplexern 140 verbunden. Die Ausgänge der Multiplexer 140 sind wiederum mit M>=2 Entfernungsbestimmungseinrichtungen 130 verbunden. Es gilt dabei weder notwendigerweise M = K noch M = N. Exemplarisch sind die Verbindungen für drei Pixel 111 verschiedener Größe und Anzahl lichtempfindlicher Elemente dargestellt. Eine in Fig. 11 schraffiert dargestellte Fläche gibt eine effektive Detektorfläche 170 an, die diejenigen Pixel 111 umfasst, die tatsächlich vom Laserlicht des Laserflecks 109 beleuchtet werden und anhand derer eine Entfernungsmessung zu dem Zielobjekt durchgeführt werden kann.

Figur 9 zeigt schematisch das Zusammenspiel von Empfangseinheit und Referenzeinheit. Die Empfangseinheit besitzt, wie oben beschrieben eine Detektionsfläche 110 mit einer Vielzahl von Pixeln 111. Im Ausführungsbeispiel der Figur 9 weist jedes Pixel 111 genau ein lichtempfindliches Element 101 auf. Die Pixel 111 sind in diesem Ausführungsbeispiel in Form einer 3 x 3 Matrix angeordnet (m x n = 3 x 3), dabei bezeichnet der erste Wert die jeweilige Zeile, der zweite Wert identifiziert die zugehörige Spalte des Arrays bzw. der Matrix. Das Pixel 1,1 in der oberen linken Ecke der Detektionsfläche (Orientierung hierbei wie in Figur 9 dargestellt) wird in diesem Ausführungsbeispiel für die Entfernungsmessung genutzt. Dem Entfernungsmesswert, der mit diesem Pixel ermittelt wird, wird ein Referenzmesswert zur Kalibrierung zugeordnet. Im Ausführungsbeispiel der Figur 9 ist dies das lichtempfindliche Element 1,3 einer ebenfalls als 3 x 3 Matrix ausgeführten Referenzdetektor Anordnung (l x k = 3 x 3).

Figur 9 zeigt also ein System mit einem Ziel-Detektor-Array und einem gleichen Referenz-Detektor-Array. Für jeden Ziel-Detektor (lichtempfindliches Element) wird ein korrespondierender Referenz-Detektor (lichtempfindliches Element) ausgewählt. Insbesondere wird derjenige Referenzpixel gewählt, der in seinen Eigenschaften und der geometrischen Anordnung im Array dem jeweiligen Ziel-Messpixel entspricht. Auf diese Weise ist es möglich, dass zugrunde liegende Problem der Laufzeitfehler oder auch einer Laufzeitdrift, zu kompensieren, wobei insbesondere auch Laufzeitfehler innerhalb einer Detektor-Anordnung berücksichtig werden können.

Generell gilt: Die einzelnen Pixel bzw. lichtempfindlichen Elemente eines Detektor-Arrays können abhängig von ihrer Lage im Array unterschiedliche Leitungslängen und damit unterschiedliche Kapazitäten aufweisen, bis die Signale der Pixel das Array verlassen und ausgewertet werden können. Durch äußere Einflüsse, wie z.B. Temperatur, oder die Eigenerwärmung eines hierzu genutzten Chips (IC) im Betrieb kann die Flankensteilheit der Bauelemente auf dem Chip variieren. Bereits geringe Änderungen der Flankensteilheiten, die typischerweise im Bereich von einigen 10ps/V liegen, können so Entfernungsfehler im mm-Bereich verursachen.

Die vorliegende Erfindung löst dieses Laufzeitproblem zwischen Ziel- und Referenzdetektor dadurch, dass für jeden Ziel-Detektor (lichtempfindliches Element) ein Referenz-Detektor (lichtempfindliches Element) mit gleicher oder zumindest ähnlicher Laufzeitdrift herangezogen wird. Der Laufzeitfehler des Ziel-Detektors zu einem Referenzdetektor reduziert sich dadurch auf einen Laufzeitdrift-Unterschied zwischen Ziel- und zugehörigem Referenzdetektor. Statt einem statischen Laufzeit-Offset, der beispielsweise in einer Look-up-Table hinterlegt werden könnte, werden mit der erfindungsgemäßen Lösung auch Laufzeit-Driften (beispielsweise über der Temperatur) reduziert.

Dies wird insbesondere durch einen symmetrischen Aufbau des Systems, wie er in Figur 9 gezeigt ist, erreicht. Unter einem "symmetrischen Aufbau des Systems" soll dabei insbesondere verstanden werden, dass die lichtempfindlichen Elemente (101) der Detektionsfläche (110) der Empfangseinrichtung ein Empfangsarray bilden und die lichtempfindlichen Elemente (107) der Detektionsfläche (117) der Referenzeinrichtung ein Referenzarray bilden, wobei das jeweilige Array matrixartig aufgebaut ist und beiden Matrizen die selben Ordnung haben, also beide eine m x n Matrix darstellen.

Dies ist die Bedeutung der Aussage, dass das Empfangsarray und das Referenzarray gleich ausgebildet sind.

Die Ausführungsform der Figur 9 zeigt demnach ein System mit einem Ziel-Detektor-Array in Form einer 3 x 3 Matrix von lichtempfindlichen Elementen und identischem Referenz-Detektor-Array in Form einer 3 x 3 Matrix von lichtempfindlichen Elementen. Für jeden Ziel-Detektor (= lichtempfindliches Element) wird dabei ein korrespondierender Referenz-Detektor ausgewählt. In vorteilhafter Weise ist dabei die Detektionsfläche 110 der Empfangseinheit 14 und die Detektionsfläche 117 der Referenzeinheit auf einem gemeinsamen Chip implementiert. Die lichteempfindlichen Elemente der Anordnungen können dabei in vorteilhafter Weise insbesondere als SPADs (Single Photon Avalanche Diode) ausgebildet sein.

Eine SPAD kann die Eigenschaft aufweisen, dass sie nicht wie herkömmliche analog arbeitende lichtempfindliche Elemente ein von der auftreffenden Strahlung linear abhängiges Detektionssignal liefert, sondern mit jedem auftreffenden Photon ein einzelnes Signal erzeugt wird. Die SPAD ist nach dem Auftreffen eines Photons für eine gewisse Totzeit, die im Bereich von beispielsweise 1 bis 100 ns liegen kann, nicht erneut aktivierbar. Man spricht auch von einem paralysierbaren Ansprechverhalten. Die Zählrate, mit der eine SPAD auftreffende Photonen zählen kann, ist somit nach oben hin durch die Totzeit begrenzt. Es kann daher vorteilhaft sein, anstatt einer einzigen großflächigen SPAD mehrere kleinere SPADs innerhalb eines Pixels vorzusehen und beispielsweise Detektionssignale von in einem einzelnen Pixel enthaltenen SPADs mit Hilfe eines Kombinierers zu kombinieren. Der Kombinierer kann hierbei beispielsweise in Form eines ODER-Gatters oder in Form eines Busses ausgestaltet sein. Auf diese Weise kann die von dem Pixel maximal erreichbare Photonenzählrate erhöht werden bzw., anders ausgedrückt, die Totzeit des Pixels zwischen einzelnen Detektionsereignissen verkürzt werden. Ferner kann zwischen einer SPAD und einem Kombinierer oder Bus ein Pulsverkürzer angeordnet sein, um ein von der SPAD generiertes digitales Signal zeitlich zu verkürzen und dadurch eine verkürzte Gesamttotzeit und eine erhöhte Photonenzählrate des Systems zu ermöglichen.

Die Anzahl von SPADs oder die Fläche von SPADs, die in einem Pixel enthalten sind, kann abhängig vom Ort des Pixels innerhalb der Detektionsfläche der Empfangseinrichtung variabel ausgewählt sein. Beispielsweise kann bekannt sein, dass die von dem Zielobjekt zurücklaufende Messstrahlung abhängig vom Abstand des Zielobjekts von der Messvorrichtung an einer anderen Position und/oder mit einer anderen Querschnittsfläche auf die Detektionsfläche der Empfangseinrichtung auftreffen kann. Die Anzahl bzw. die Fläche von SPADs innerhalb eines Pixels kann demnach ortsabhängig an die zu erwartende auftreffende Lichtintensität angepasst werden. Durch Anpassung der Flächen der SPADs und/oder Anzahl von SPADs innerhalb eines Pixels kann ein Dynamikbereich der Messvorrichtung optimiert werden. Durch Anpassung der Pixel-Flächen an eine Laserfleckgröße kann ein Signal-Rausch-Verhältnis optimiert werden.

Im Ausführungsbeispiel der Figur 10 sind auf der Detektionsfläche 110 der Empfangseinheit 14 und der Detektionsfläche 117 der Referenzeinheit jeweils drei Pixel ausgebildet. Ein erstes Pixel umfasst 4 lichtempfindliche Elemente in Form einer 2 x 2 Matrix, darüber hinaus gibt es noch ein Pixel mit drei lichtempfindlichen Elementen und ein Pixel mit zwei lichtempfindlichen Elementen. Dem zusammen geschalteten 2x2 Pixel auf der Zielmessseite entspricht ein analog angeordnetes 2x2 Pixel auf Seiten der Referenzeinheit. Zusammengeschaltet heißt in diesem Zusammenhang, dass eine parallele Messung mehrerer Ziel-Detektoren (lichtempfindlichen Elemente) vorgenommen wird, wie dies oben im Detail bei der Beschreibung der Empfangseinheit ausgeführt wurde. Im Ausführungsbeispiel der Figur 10 sind dabei auch auf dem Referenz-Detektor-Array die korrespondierenden Pixel ausgewählt, um entsprechende Driften zu minimieren.

Der Einsatz zweier identischer, symmetrisch aufgebauter Detektor-Arrays für Empfangseinheit und Referenzeinheit ist die bevorzugte Lösung, um zu jedem Ziel-Detektor einen Referenz-Detektor mit "identischen" Eigenschaften auszuwählen.

Andere Anordnungen sind aber selbstverständlich ebenso möglich.

Die Figur 11 zeigt beispielsweise eine alternative, erfindungsgemäße Ausführungsform mit nicht symmetrischen Arrays. Auf der Ziel-Detektors Seite (Empfangseinheit) befindet sich wiederum eine 3 x 3 Matrix von 9 lichtempfindlichen Elementen, so wie sie auch im Zusammenhang mit Figur 9 beschrieben wurde. Auf der Referenzseite wird jedoch - im Unterschied zum Ausführungsbeispiel der Figur 9 - ein reduziertes Referenz - Detektor - Array mit lediglich 3 lichtempfindlichen Elementen in Form einer 1 x 3 Matrix verwendet. Um beispielsweise Chip-Fläche zu sparen, wird jeder Spalte der Ziel-Detektors Seite (Empfangseinheit) Matrix ist somit lediglich ein einzelnes Referent - Detektor Element (= lichtempfindliches Element) zugeordnet. D.h. es wird nur eine Zeile des Referenz-Detektor-Array identisch mit dem Ziel-Detektor-Array aufgebaut.

Die Erfindung ist nicht auf die in den Ausführungsbeispielen gezeigten Anordnungen von lichtempfindlichen Elementen auf der Empfangs- bzw. Referenzseite beschränkt.

Alternativ ist es beispielsweise auch möglich, das Referenz-Array mit konzentrierten Elementen nachzubilden. Beispielsweise könnte ein Referenzdetektor schaltbar mit resistiven oder kapazitiven Elementen verbunden werden, um so die Leitungslängen und Lasten der jeweiligen Referenz-Detektoren nachzubilden.

Abschließend sollen Aspekte und Vorteile von Ausführungsformen der Erfindung noch einmal mit anderen Worten zusammengefasst werden:
Eine Ausführungsform der Erfindung beruht auf dem Kerngedanken, die Art der Anordnung einzelner lichtempfindlicher Elemente in Pixeln, deren Signale kombiniert werden, bevor sie einer zeitlichen Auswerteeinheit mit einer Mehrzahl an Entfernungsbestimmungseinrichtungen zur weiteren Auswertung zugeführt werden, in vorteilhafter Weise auszugestalten. Die Menge an lichtempfindlichen Elementen, deren Signale mittels eines Kombinierers zusammengefasst werden, bildet dabei ein Pixel. Die erfindungsgemäße Messvorrichtung weist dabei eine Empfangseinrichtung mit einer Detektionsfläche zur Detektion von einem Zielobjekt zurücklaufender optischer Messstrahlung auf, wobei die Detektionsfläche eine Vielzahl von Pixeln aufweist, wobei jedes Pixel zumindest ein lichtempfindliches Element aufweist. Darüber hinaus weist die erfindungsgemäße Messvorrichtung auch eine Referenzeinrichtung mit einer Detektionsfläche zur Detektion einer vorrichtungsinternen Referenzstrahlung auf wobei auch die Detektionsfläche der Referenzeinrichtung eine Vielzahl von Pixeln aufweist, wobei jedes Pixel zumindest ein lichtempfindliches Element aufweist

Die einzelnen Pixel können unabhängig voneinander betrieben werden. Insbesondere kann eine Phasen-Auswertung einer kontinuierlichen Welle oder alternativ eine Flugzeitauswertung eines Pulses für jedes einzelne Pixel ausgeführt werden.

Eine Kombination mehrerer lichtempfindlicher Elemente zu Pixeln kann räumlich derart ausgestaltet werden, dass das Signal-Rausch-Verhältnis sowohl bei großen als auch bei kleinen Entfernungen insbesondere unter starker Hintergrundbeleuchtung mit wenigen Entfernungsbestimmungseinrichtungen optimiert werden kann. Erreicht werden kann dies über eine über die Detektionsfläche ortsabhängige Anpassung der Größe der Pixel bzw. der Anzahl von lichtempfindlichen Elementen, die zu einem Pixel kombiniert werden.

Eine Detektionsfläche kann so groß dimensioniert sein, dass die Anforderungen an die Justage der Empfangsoptik verringert werden können. Außerdem kann der Einfluss optischer Abbildungsfehler, insbesondere der Fehler durch Defokussierung aufgrund zu geringer Schärfentiefe, minimiert werden. Dadurch können die Anforderungen an die optische Qualität der Empfangsoptik verringert werden.

Durch die direkte Zuordnung von Pixeln der Referenzeinheit zu Pixeln der Empfangseineinheit lassen sich Laufzeitfehler und insbesondere Laufzeitdriften minimieren und die Messgenauigkeit erhöhen.

Ein weiterer Vorteil kann die Optimierung des Signal-Rausch-Verhältnisses insbesondere bei großen Messentfernungen unter hohem Hintergrundlicht-Anteil sein. Dies kann dadurch erreicht werden, dass die effektive Detektionsfläche bei allen Entfernungen optimal an die Größe des tatsächlich abgebildeten Lasermessflecks in der Detektionsebene angepasst, das heißt minimiert werden kann. Nach abgeschlossener Messung können gezielt die Signale von ausschließlich denjenigen einzelnen lichtempfindlichen Elementen bzw. Pixeln mit mehreren lichtempfindlichen Elementen ausgewertet werden, die tatsächlich Laserstrahlung empfangen. Dadurch kann die effektive Detektionsfläche reduziert und der Rauschbeitrag des Hintergrundlichtes minimiert werden, was gleichbedeutend mit einer Verbesserung des Signal-Rausch-Verhältnisses sein kann.

Ein weiterer Vorteil kann darin bestehen, dass aufgrund der Zusammenfassung mehrerer lichtempfindlicher Elemente innerhalb eines Pixels weniger Entfernungsbestimmungseinrichtungen als lichtempfindliche Elemente vorhanden sind benötigt werden. Dies kann eine benötigte Chipfläche einer integrierten Schaltung reduzieren. Insbesondere bei Laserentfernungsmessern, die in der Regel mit einer festen Brennweite arbeiten, kann dieser Vorteil eine wichtige Rolle spielen, da der Laserfleckdurchmesser dann in Abhängigkeit von der Entfernung des Zielobjekts variieren kann. Fig. 6 verdeutlicht dies für ein System, bei dem der Parallaxen-Fehler nicht korrigiert ist. Um das Signal-Rausch-Verhältnis wie zuvor beschrieben durch Minimierung der effektiven Detektionsfläche zu optimieren, kann bei größeren Laserfleck-Durchmessern, das heißt in der Regel bei geringeren Entfernungen des Zielobjektes, dementsprechend auch nur eine geringere Auflösung des Detektors benötigt werden. Dieser Umstand lässt sich durch die ortsabhängige Kombination von lichtempfindlichen Elementen zu Pixeln ausnutzen.

Da die effektive Detektionsfläche, das heißt die Fläche, die in der Auswertung der Messung berücksichtigt wird, in der Regel kleiner ist als die gesamte Detektionsfläche, kann die Anzahl benötigter Entfernungsbestimmungseinrichtungen noch weiter reduziert werden, indem zusätzlich zur Kombination von lichtempfindlichen Element en auch noch ein Multiplexen angewandt wird. Mit Hilfe vorläufiger Messungen können in diesem Fall die Laserstrahlung empfangenden Pixel zunächst identifiziert und anschließend für die eigentliche Messung auf die Entfernungsbestimmungseinrichtungen verteilt werden. Ist N die Gesamtzahl an Pixeln mit einer oder mehreren lichtempfindlichen Elementen und M die Anzahl der zur Auswertung zur Verfügung stehenden Entfernungsbestimmungseinrichtungen, dann müssen maximal aufgerundet N/M vorläufige Messungen zur Identifizierung durchgeführt werden. Die Messaufgabe kann daher mit wenigen Messungen, im Idealfall mit einer einzigen Messung, durchgeführt werden.

Ein weiterer Vorteil kann darin liegen, dass einzelne Pixel unabhängig voneinander kalibriert werden können, zum Beispiel hinsichtlich eines Phasen-Offsets.

## Patentansprüche

1. Messvorrichtung (10) zur optischen Entfernungsmessung, insbesondere handgehaltenes Messgerät zur Abstandsmessung, mit einer Sendeeinrichtung (12) zur Aussendung optischer Messstrahlung (13) auf ein Zielobjekt (15) hin; einer Empfangseinrichtung (14) mit einer Detektionsfläche (110) zur Detektion von von dem Zielobjekt (15) zurücklaufender optischer Messstrahlung (16), wobei die Detektionsfläche (110) eine Vielzahl von Pixeln (111) aufweist, wobei jedes Pixel (111) zumindest ein lichtempfindliches Element (101) aufweist, sowie mit einer Referenzeinrichtung mit einer Detektionsfläche (117) zur Detektion einer vorrichtungsinternen Referenzstrahlung, wobei die Detektionsfläche (117) der Referenzeinrichtung eine Vielzahl von Pixeln (127) aufweist, wobei jedes Pixel (127) zumindest ein lichtempfindliches Element (107) aufweist, **dadurch gekennzeichnet, dass** einem Pixel (111) der Detektionsfläche (110) der Empfangseinrichtung ein Pixel (127) der Detektionsfläche (117) der Referenzeinrichtung zugeordnet ist.

2. Messvorrichtung nach Anspruch 1, **dadurch gekennzeichnet, dass** ein Pixel (111) der Detektionsfläche (110) der Empfangseinrichtung eine gleiche Anzahl lichtempfindlicher Elemente (101, 107) aufweist, wie ein Pixel (127) der Detektionsfläche (117) der Referenzeinrichtung.

3. Messvorrichtung nach Anspruch 1 oder 2, **dadurch gekennzeichnet, dass** einem lichtempfindlichen Element (101) der Detektionsfläche (110) der Empfangseinrichtung (14) ein lichtempfindliches Element (107) der Detektionsfläche (117) der Referenzeinrichtung zugeordnet ist.

4. Messvorrichtung nach zumindest einem der Ansprüche 1 bis 3, **dadurch gekennzeichnet, dass** die lichtempfindlichen Elemente (101) der Detektionsfläche (110) der Empfangseinrichtung ein Empfangsarray bilden und die lichtempfindlichen Elemente (101) der Detektionsfläche (117) der Referenzeinrichtung ein Referenzarray bilden.

5. Messvorrichtung nach Anspruch 4, **dadurch gekennzeichnet, dass** das Empfangsarray als eine n x m Matrix ausgebildet ist und Referenzarray als l x k Matrix ausgebildet ist, wobei n, m, l, k ganze Zahlen sind

6. Messvorrichtung nach Anspruch 4 oder 5, **dadurch gekennzeichnet, dass** das Empfangsarray und das Referenzarray gleich ausgebildet sind.

7. Messvorrichtung nach einem der vorhergehenden Ansprüche, **dadurch gekennzeichnet, dass** die Detektionsfläche (110) der Empfangseinheit (14) und die Detektionsfläche (117) der Referenzeinrichtung auf einem gemeinsamen Chip implementiert sind.

8. Messvorrichtung nach einem der vorhergehenden Ansprüche, **dadurch gekennzeichnet, dass** eine Auswerteeinrichtung (36) mit einer Mehrzahl von Entfernungsbestimmungseinrichtungen vorgesehen ist, wobei die Auswerteeinrichtung (36) derart ausgelegt ist, dass zumindest einer der Mehrzahl von Entfernungsbestimmungseinrichtungen Detektionssignale einer Mehrzahl von Pixeln zugeleitet werden, auf Basis derer die jeweilige Entfernungsbestimmungseinrichtung Entfernungsdaten ermittelt.

9. Messvorrichtung nach Anspruch 8, **dadurch gekennzeichnet, dass** die Entfernungsbestimmungseinrichtungen (130) jeweils dazu ausgelegt sind, eine Flugdauer von Messstrahlung (13, 16) zwischen einer Aussendung von der Sendeeinrichtung (12) bis zu einer Detektion von von dem Zielobjekt (15) zurücklaufender Messstrahlung (16) zu ermitteln und daraus eine Entfernung zu bestimmen.

10. Messvorrichtung nach zumindest einem der Ansprüche 8 bis 9, **dadurch gekennzeichnet, dass** die Entfernungsbestimmungseinrichtungen (130) jeweils dazu ausgelegt sind, eine Flugdauer von Referenzstrahlung (42) zwischen einer Aussendung von der Sendeeinrichtung (12) bis zu einer Detektion mittels der Referenzeinrichtung zu ermitteln und daraus eine Referenzentfernung zu bestimmen.

11. Messvorrichtung nach einem der Ansprüche 8 bis 10, **dadurch gekennzeichnet, dass** die Auswerteeinrichtung (36) dazu ausgelegt ist, die Entfernung (48) zwischen der Messvorrichtung (10) und dem Zielobjekt (15) basierend auf den von den Entfernungsbestimmungseinrichtungen (130) bestimmten Entfernungen zu bestimmen.

12. Messvorrichtung nach einem der vorhergehenden Ansprüche, **dadurch gekennzeichnet, dass**, die Sendeeinrichtung (12) und die Empfangseinrichtung (14) nebeneinander entlang einer Parallaxenachse (113) angeordnet sind und wobei die Anzahl von lichtempfindlichen Elementen (101), die in einem Pixel (111) enthalten sind, abhängig vom Ort entlang der Parallaxenachse (113) variiert.

13. Messvorrichtung nach einem der vorhergehenden Ansprüche, **dadurch gekennzeichnet, dass** die Empfangseinrichtung (14) und die Auswerteeinrichtung (36) dazu ausgelegt sind, dass Detektionssignale einzelner Pixel (111) unabhängig von Detektionssignalen anderer Pixel (111) von der Auswerteeinrichtung (36) ausgewertet werden können.

14. Messvorrichtung nach einem der vorhergehenden Ansprüche, **dadurch gekennzeichnet, dass** die lichtempfindliche Elementen (101) der Detektionsfläche (110) der Empfangseinrichtung und / oder die lichtempfindliche Elementen (107) der Detektionsfläche (117) der Referenzeinrichtung durch SPADs gebildet sind.

## Claims

1. Measuring device (10) for optical ranging, more particularly hand-held measuring instrument for ranging, comprising a transmission apparatus (12) for emitting optical measurement radiation (13) toward a target object (15); a reception apparatus (14) with a detection area (110) for detecting optical measurement radiation (16) returning from the target object (15), wherein the detection area (110) has a multiplicity of pixels (111), wherein each pixel (111) has at least one light-sensitive element (101), and comprising a reference apparatus with a detection area (117) for detecting device-internal reference radiation, wherein the detection area (117) of the reference apparatus has a multiplicity of pixels (127), wherein each pixel (127) has at least one light-sensitive element (107) **characterized in that** one pixel (127) of the detection area (117) of the reference apparatus is assigned to one pixel (111) of the detection area (110) of the reception apparatus.

2. Measuring device according to Claim 1, **characterized in that** a pixel (111) of the detection area (110) of the reception apparatus has the same number of light-sensitive elements (101, 107) as a pixel (127) of the detection area (117) of the reference apparatus.

3. Measuring device according to Claim 1 or 2, **characterized in that** one light-sensitive element (107) of the detection area (117) of the reference apparatus is assigned to one light-sensitive element (101) of the detection area (110) of the reception apparatus (14).

4. Measuring device according to at least one of Claims 1 to 3, **characterized in that** the light-sensitive elements (101) of the detection area (110) of the reception apparatus form a reception array and the light-sensitive elements (101) of the detection area (117) of the reference apparatus form a reference array.

5. Measuring device according to Claim 4, **characterized in that** the reception array is formed as an n × m matrix and the reference array is formed as an 1 × k matrix, where n, m, l, k are integers.

6. Measuring device according to Claim 4 or 5, **characterized in that** the reception array and the reference array have the same design.

7. Measuring device according to one of the preceding claims, **characterized in that** the detection area (110) of the reception unit (14) and the detection area (117) of the reference apparatus are implemented on a common chip.

8. Measuring device according to one of the preceding claims, **characterized in that** provision is made for an evaluation apparatus (36) with a plurality of distance determination apparatuses, wherein the evaluation apparatus (36) is designed in such a way that at least one of the plurality of distance determination apparatuses is supplied with detection signals from a plurality of pixels, on the basis of which the respective distance determination apparatus establishes distance data.

9. Measuring device according to Claim 8, **characterized in that** the distance determination apparatuses (130) are respectively designed to establish a time-of-flight of measurement radiation (13, 16) from an emission from the transmission apparatus (12) to a detection of measurement radiation (16) returning from the target object (15) and determine a distance therefrom.

10. Measuring device according to at least one of Claims 8 to 9, **characterized in that** the distance determination apparatuses (130) are respectively designed to establish a time-of-flight of reference radiation (42) from an emission from the transmission apparatus (12) to detection by means of the reference apparatus and determine a reference distance therefrom.

11. Measuring device according to one of Claims 8 to 10, **characterized in that** the evaluation apparatus (36) is designed to determine the distance (48) between the measuring device (10) and the target object (15) on the basis of the distances determined by the distance determination apparatuses (130).

12. Measuring device according to one of the preceding claims, **characterized in that** the transmission apparatus (12) and the reception apparatus (14) are arranged next to one another along a parallax axis (113) and wherein the number of light-sensitive elements (101) contained in a pixel (111) varies depending on the position along the parallax axis (113).

13. Measuring device according to one of the preceding claims, **characterized in that** the reception apparatus (14) and the evaluation apparatus (36) are designed to allow detection signals from individual pixels (111) to be evaluated by the evaluation apparatus (36), independently of detection signals from other pixels (111).

14. Measuring device according to one of the preceding claims, **characterized in that** the light-sensitive elements (101) of the detection area (110) of the reception apparatus and/or the light-sensitive elements (107) of the detection area (117) of the reference apparatus are formed by SPADs.

## Revendications

1. Ensemble de mesure (10) destiné à mesurer optiquement des distances, en particulier appareil de mesure portable de mesure de distance, présentant
un dispositif d'émission (12) qui émet un rayonnement optique de mesure (13) sur un objet-cible (15),
un dispositif de réception (14) doté d'une surface de détection (110) qui permet de détecter le rayonnement optique de mesure (16) réfléchi par l'objet-cible (15), la surface de détection (110) présentant plusieurs pixels (111), chaque pixel (111) présentant au moins un élément photosensible (101),
et un dispositif de référence doté d'une surface de détection (117) qui permet de détecter un rayonnement de référence interne au dispositif, la surface de détection (117) du dispositif de référence présentant plusieurs pixels (127), chaque pixel (127) présentant au moins un élément photosensible (107), **caractérisé en ce que**
un pixel (127) de la surface de détection (117) du dispositif de référence est associé à un pixel (111) de la surface de détection (110) du dispositif de réception.

2. Ensemble de mesure selon la revendication 1, **caractérisé en ce qu'**un pixel (111) de la surface de détection (110) du dispositif de réception présente le même nombre d'éléments photosensibles (101, 107) qu'un pixel (127) de la surface de détection (117) du dispositif de référence.

3. Ensemble de mesure selon les revendications 1 ou 2, **caractérisé en ce qu'**un élément photosensible (107) de la surface de détection (117) du dispositif de référence est associé à un élément photosensible (101) de la surface de détection (110) du dispositif de réception (14).

4. Ensemble de mesure selon au moins l'une des revendications 1 à 3, **caractérisé en ce que** les éléments photosensibles (101) de la surface de détection (110) du dispositif de réception forment une batterie de réception et **en ce que** les éléments photosensibles (107) de la surface de détection (117) du dispositif de référence forment une batterie de référence.

5. Ensemble de mesure selon la revendication 4, **caractérisé en ce que** la batterie de réception est configurée sous la forme d'une matrice n x m et la batterie de référence sous la forme d'une matrice l x k, n, m, l, k, étant des nombres entiers.

6. Ensemble de mesure selon les revendications 4 ou 5, **caractérisé en ce que** la batterie de réception et la batterie de référence sont identiques.

7. Ensemble de mesure selon l'une des revendications précédentes, **caractérisé en ce que** la surface de détection (110) de l'unité de réception (14) de la surface de détection (117) du dispositif de référence sont implémentées sur une puce commune.

8. Ensemble de mesure selon l'une des revendications précédentes, **caractérisé en ce qu'**une unité d'évaluation (36) qui présente plusieurs dispositifs de détermination de distance est prévue, le dispositif d'évaluation (36) étant conçu de telle sorte que les signaux de détection de plusieurs pixels sont amenés à au moins l'un des différents dispositifs de détermination de distance, et **en ce que** le dispositif de détermination de distance concerné détermine à partir de là des données de distance.

9. Ensemble de mesure selon la revendication 8, **caractérisé en ce que** les dispositifs (130) de détermination de distance sont tous conçus pour déterminer le temps de parcours du rayonnement de mesure (13, 16) entre l'émission par le dispositif d'émission (12) jusqu'à la détection du rayonnement de mesure (16) réfléchi par l'objet-cible (15) et pour déterminer une distance à partir de là.

10. Ensemble de mesure selon au moins l'une des revendications 8 et 9, **caractérisé en ce que** les dispositifs (130) de détermination de distance sont tous conçus pour déterminer le temps de parcours du rayonnement de référence (42) entre l'émission par le dispositif d'émission (12) jusqu'à la détection par le dispositif de référence et pour déterminer une distance à partir de là.

11. Ensemble de mesure selon l'une des revendications 8 à 10, **caractérisé en ce que** le dispositif d'évaluation (36) est conçu pour déterminer la distance (48) entre l'ensemble de mesure (10) et l'objet-cible (15) sur la base des distances définies par les dispositifs (130) de détermination de distance.

12. Ensemble de mesure selon l'une des revendications précédentes, **caractérisé en ce que** le dispositif d'émission (12) et le dispositif de réception (14) sont disposés l'un à côté de l'autre le long d'un axe de parallaxe (113) et **en ce que** le nombre d'éléments photosensibles (101) que contient un pixel (111) varie en fonction de la distance suivant l'axe de parallaxe (113) .

13. Ensemble de mesure selon l'une des revendications précédentes, **caractérisé en ce que** le dispositif de réception (14) et le dispositif d'évaluation (36) sont conçus pour permettre l'évaluation par le dispositif d'évaluation (36) de signaux de détection de pixels individuels (111) indépendamment des signaux de détection d'autres pixels (111).

14. Ensemble de mesure selon l'une des revendications précédentes, **caractérisé en ce que** les éléments photosensibles (101) de la surface de détection (110) du dispositif de réception et/ou les éléments photosensibles (107) de la surface de détection (117) du dispositif de référence sont formés par des SPAD.
